# EUROPÄISCHE PATENTSCHRIFT

(11) **EP 3 536 424 B1**
(45) Veröffentlichungstag und Bekanntmachung des Hinweises auf die Patenterteilung: **29.12.2021**
(21) Anmeldenummer: 19150279.8
(22) Anmeldetag: 04.01.2019
(51) Int. Cl.: B22F 10/68, B22F 10/66, B08B 7/02, F28G 7/00, F28G 15/02, B29C 64/35, B22F 10/73, B33Y 40/20, B08B 5/02

(54) **REINIGUNGSVORRICHTUNG ZUR REINIGUNG VON DREIDIMENSIONALEN OBJEKTEN**
CLEANING DEVICE FOR CLEANING THREE-DIMENSIONAL OBJECTS
DISPOSITIF DE NETTOYAGE PERMETTANT DE NETTOYER DES OBJETS TRIDIMENSIONNELS

(30) Priorität: 19.02.2018 DE 102018001604; 07.11.2018 DE 102018008738
(43) Veröffentlichungstag der Anmeldung: 11.09.2019
(73) Patentinhaber: Solukon Ingenieure GbR, 86391 Stadtbergen (DE)
(72) Erfinder: HARTMANN, Andreas, 86391 Stadtbergen (DE)
(74) Vertreter: Wiedemann, Markus

(56) Entgegenhaltungen:
- CN-A- 106 768 861
- CN-U- 204 264 994
- DE-A1-102017 115 043
- DE-U1-202016 003 042
- US-A1- 2008 149 308
- US-A1- 2017 036 401

## Beschreibung

Die Erfindung betrifft eine Reinigungsvorrichtung zur Reinigung von dreidimensionalen Objekten, welche durch schichtweises Aufbringen und selektives Verfestigen eines pulverförmigen Aufbaumaterials hergestellt worden sind, gemäß dem Oberbegriff von Anspruch 1.

Eine Reinigungsvorrichtung ist aus WO 2015/071184 A1 bekannt. Dort wird ein Wechselbehälter, in welchem das Objekt und eine Bauplattform für das Objekt untergebracht sind, an einer Drehvorrichtung angebracht und dann der Wechselbehälter um einen Winkel von mindestens 90° aus der aufrechten Position herausgedreht, damit unverfestigt gebliebenes Pulver aus dem Wechselbehälter herausrieseln kann. Zusätzlich ist vorgesehen, dass Vibrationen von außen auf den Wechselbehälter aufgebracht werden, um ein Ablösen von Pulver von dem Objekt zu unterstützen. Dabei ist aber nicht offenbart, auf welche Weise die Vibrationen erzeugt und auf den Wechselbehälter bzw. das Objekt übertragen werden.

DE 20 2016 003042 U1, DE 10 2017 115 043 A1 und US 2017/036401 A1 offenbaren jeweils eine Reinigungsvorrichtung mit einem Drehteller oder einer drehbaren Plattform zum Spannen des zu reinigenden Objekts, wobei der Drehteller oder die drehbare Plattform in Schwingungen versetzbar ist. DE 10 2017 115 043 A1 erwähnt einen pneumatischen Aktuator als Schwingungsquelle. Die gattungsfremde CN 106 768 861 A beschreibt eine Positioniervorrichtung mit einem Drehteller mit Luftöffnungen, durch welche Druckluft strömt.

In der gattungsgemäßen DE 20 2016 003 042 A1 wird ein direkt am Drehteller angebrachter pneumatischer Rüttler offenbart, welcher den Drehteller, auf welchem das Objekt gespannt ist, in Vibrationen versetzt, welche dann auf das Objekt übertragen werden. Die Verwendung eines solchen pneumatischen Rüttlers auf einem drehbaren Drehteller bringt Probleme im Hinblick auf die Druckluftversorgung des Rüttlers mit sich.

Die Aufgabe der Erfindung besteht darin, eine Reinigungsvorrichtung der eingangs erwähnten Art derart weiter zu entwickeln, dass eine möglichst einfache und flexibel nutzbare Möglichkeit zum Be- und Entlüften des pneumatischen Rüttlers zur Verfügung gestellt wird.

Diese Aufgabe wird durch die Merkmale von Patentanspruch 1 gelöst.

### Offenbarung der Erfindung

Die Erfindung geht aus von einer Reinigungsvorrichtung zur Reinigung von dreidimensionalen Objekten, welche durch schichtweises Aufbringen und selektives Verfestigen eines pulverförmigen Aufbaumaterials hergestellt worden sind, von umgebendem, unverfestigt gebliebenem pulverförmigen Aufbaumaterial, mit einem ersten Motor, welcher über wenigstens eine erste Antriebswelle einen Drehteller rotatorisch treibt, auf welchem das Objekt lösbar spannbar ist, wobei der Drehteller in einer Reinigungskammer angeordnet ist, in welcher die Reinigung des Objekts stattfindet, und mit einem derart auf oder an dem Drehteller angeordneten pneumatisch betätigten Rüttler, dass er den Drehteller in Vibrationen versetzt, wobei der Rüttler mit unter Druck stehender Zuluft versorgbar (belüftbar) und von unter Druck stehender Abluft entlastbar (entlüftbar) ist.

Unter Zuluft soll daher Druckluft verstanden werden, welche dem pneumatischen Rüttler zugeführt und für dessen Antrieb notwendig ist. Die Abluft besteht dann ebenfalls in Druckluft, welche bedingt durch die Energie, welche ihr durch den Antrieb des pneumatischen Rüttlers entzogen wurde, einen geringeren Druck aufweist und vom Rüttler abströmt.

Das Herstellen des dreidimensionalen Objekts, wie beispielsweise eines Bauteils oder Modells erfolgt daher in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher Strahlung zu verschmelzen oder zu versintern.

Die Reinigung des Objekts von losem, nicht verfestigtem pulverförmigem Aufbaumaterial in der Reinigungsvorrichtung kann das komplette Auspacken des Objekts und der Bauplattform aus dem Pulverkuchen losen Pulvers beinhalten oder aber lediglich ein Abreinigen von Resten von losem Pulver von dem Objekt und der Bauplattform, welches nach dem Auspacken noch an dem Objekt und an der Bauplattform anhaftet.

Erfindungsgemäß ist bei der Reinigungsvorrichtung vorgesehen, dass
a) wenigstens ein Teil der Zuluft über einen Zuluftkanal geführt wird, von welchem ein erster Abschnitt innerhalb der ersten Antriebswelle ausgebildet ist, welcher in Bezug auf die Antriebswelle koaxial angeordnet ist, und dass
b) wenigstens ein Teil der Abluft über wenigstens einen Abluftkanal geführt wird, von welchem ein erster Abschnitt innerhalb der ersten Antriebswelle ausgebildet ist.

Der Zuluftkanal für den pneumatischen Rüttler ist bevorzugt gegenüber der Reinigungskammer abgedichtet, damit kein pulverförmiges Aufbaumaterial in den Rüttler eindringen kann.

Weil wenigstens ein Teil der Zuluft über einen Zuluftkanal geführt wird, von welchem ein erster Abschnitt innerhalb der ersten Antriebswelle ausgebildet ist, welcher in Bezug auf die Antriebswelle koaxial angeordnet ist, wird die Zuluft auf effektive Weise und insbesondere ohne Einschränkung durch die Drehungen des Drehtellers dem pneumatischen Rüttler als Arbeitsluft zugeführt.

Insbesondere kann ein zweiter Abschnitt des Zuluftkanals, welcher nicht mit der ersten Antriebswelle mitdreht mit dem ersten Abschnitt des Zuluftkanals über eine koaxial in Bezug zur ersten Antriebswelle angeordnete Drehdurchführung verbunden sein, welche sehr einfach ausgeführt werden kann.

Da die eigentlich nutzlose Abluft des pneumatischen Rüttlers in vorteilhafter Weise noch für weitere Zwecke genutzt wird, beispielsweise zur Kühlung wenigstens des ersten Motors, welcher die erste Antriebswelle antreibt, muss der erste Abschnitt des Abluftkanals nicht zwangsläufig ebenfalls koaxial innerhalb der ersten Antriebswelle angeordnet sein. Denn für nützliche Zwecke der Abluft des pneumatischen Rüttlers ist es beispielsweise ausreichend, dass eine Mündung des ersten Abschnitts des Abluftkanals im Inneren eines ersten Gehäuses mündet, welches den ersten Motor haust. Dadurch kann vorteilhaft die Kühlung wenigstens des ersten Motors durch Abluft des pneumatischen Rüttlers erfolgen.

Dabei kann der innerhalb der ersten Antriebswelle angeordnete erste Abschnitt des wenigstens einen Abluftkanals parallel und exzentrisch in Bezug zur Mittelachse der ersten Antriebswelle und damit auch in Bezug zum ersten Abschnitt des Zuluftkanals angeordnet werden, was die Entlüftung des pneumatischen Rüttlers stark vereinfacht, weil dann keine Konfliktsituation bei der Führung von Zuluft und Abluft innerhalb der ersten Antriebswelle entsteht.

Bevorzugt ist das Innere des ersten Gehäuses über einen Filter mit der Reinigungskammer verbunden.

Gemäß einer weiterbildenden Maßnahme wird dann durch den ersten Abschnitt des wenigstens einen Abluftkanals in das Innere des ersten Gehäuses geführte Abluft des pneumatischen Rüttlers über einen Filter in die Reinigungskammer abgeblasen. Der Filter sorgt dann dafür, dass kein loses Pulvermaterial in das erste Gehäuse eindringen und die dort gehausten Baugruppen, beispielsweise den ersten Motor verschmutzen kann. Insofern ist auch der Abluftkanal für den pneumatischen Rüttler bevorzugt gegenüber der Reinigungskammer abgedichtet. Weiterhin sorgt die unter Druck stehende Abluft im Inneren des ersten Gehäuses dafür, dass infolge des Druckgefälles kein pulverförmiges Aufbaumaterial ins Innere des ersten Gehäuses nach Art einer Sperrluftdichtung eindringen kann.

Gemäß einer Weiterbildung kann das erste Gehäuse zusätzlich zu dem ersten Motor ein erstes Getriebe hausen, welches den ersten Motor mit der ersten Antriebswelle verbindet. Bevorzugt wird das erste Getriebe durch ein erstes Riemenvorgelege-Getriebe gebildet.

Gemäß einer Alternative kann in das Innere des ersten Gehäuses ein nicht brennbares Schutzgas derart eingeführt werden, dass es den ersten Motor kühlt. Dieses Schutzgas kann dann beispielsweise aus dem Inneren des ersten Gehäuses infolge seines Drucks über den Filter in die Reinigungskammer abgeblasen werden. Durch das nicht brennbare Schutzgas, z.B. Stickstoff wird dann zum einen die Explosionsgefahr reduziert, welche durch das mit dem Luftsauerstoff vermischte lose Pulver innerhalb der Reinigungskammer entsteht. Zum andern wird mit Hilfe des Schutzgases wenigstens der erste Motor gekühlt.

Zusätzlich oder alternativ kann durch den ersten Abschnitt des wenigstens einen Abluftkanals geführte Abluft des pneumatischen Rüttlers in eine Druckluftreinigungseinrichtung der Reinigungsvorrichtung eingespeist, durch welche die Abluft oder ein Teil davon über wenigstens eine Düse als Abluftstrahl in Richtung des Objekts ausgeblasen wird, um unverfestigtes Aufbaumaterial von dem Objekt zu entfernen.

Bevorzugt ist die erste Antriebswelle koaxial mit dem Drehteller verbunden.

Wenigstens der Drehteller, der erste Motor, und die erste Antriebswelle können an einem Dreharm mitdrehend gelagert sein, welcher mit einer zweiten Antriebswelle verbunden ist, welche durch einen zweiten Motor um eine zweite Drehachse koaxial angetrieben ist, welche senkrecht in Bezug zu einer ersten Drehachse ist, um welche der Drehteller durch den ersten Motor drehbar angetrieben ist.

Weiterhin kann ein zweiter Abschnitt des Zuluftkanals mit dem Dreharm mitdrehend ausgebildet und mit dem ersten Abschnitt des Zuluftkanals über eine koaxial in Bezug zur ersten Antriebswelle angeordnete erste Drehdurchführung verbunden sein, was eine einfache Möglichkeit bietet, um den bezogen auf den Dreharm mitdrehenden zweiten Abschnitt des Zuluftkanals mit dem mit der ersten Antriebswelle mitdrehenden ersten Abschnitt des Zuluftkanals strömungsmäßig zu verbinden.

Gemäß einer Weiterbildung kann ein Teil des zweiten Abschnitts des Zuluftkanals innerhalb des Dreharms ausgebildet sein.

Auch kann ein Teil des zweiten Abschnitts des Zuluftkanals innerhalb der zweiten Antriebswelle ausgebildet und über eine zweite Drehdurchführung mit einer Druckluftquelle verbunden sein.

Gemäß einer Weiterbildung sind der Drehteller durch den ersten Motor um die erste Drehachse in einem Winkelbereich von 0 Grad bis 360 Grad und der Dreharm durch den zweiten Motor in einem zweiten Winkelbereich von 0 Grad bis 360 Grad drehbar angetrieben. Dabei ist insbesondere vorgesehen, dass der Drehteller und/oder der Dreharm eine vollständige Drehung 0 Grad bis 360 Grad mehrmals durchführen, damit komplexe Innenstrukturen wie in dem Objekt ausgebildete verwinkelte Innenkanäle von losem Aufbaumaterial befreit werden können.

Der erste Motor und/oder der zweite Motor sind (ist) bevorzugt ein Servomotor(en), welche(r) von einer elektronischen Steuerung gesteuert werden (wird), um gewünschte Drehlagen des Drehtellers zu erzielen.

Durch diese Maßnahmen ergibt sich eine einfache bauliche Möglichkeit, das auf dem Drehteller lösbar gespannte Objekt um zwei Drehachsen (zwei Drehfreiheitsgrade) und in einem jeweils maximalen Winkelbereich zu drehen, um ein Ablösen von unverfestigt gebliebenem Aufbaumaterial von dem Objekt unterstützen.

Auch kann das erste Gehäuse innerhalb des Dreharms angeordnet sein oder durch eine Wandung des Dreharms gebildet werden.

Gemäß einer fortbildenden Maßnahme kann Abluft des pneumatischen Rüttlers wahlweise über einen zweiten Abschnitt des wenigstens einen Abluftkanals aus der Reinigungskammer herausgeleitet werden, beispielsweise dadurch, dass der zweite Abschnitt des wenigstens einen Abluftkanals von dem ersten Abschnitt des Abluftkanals abzweigt und wenigstens teilweise innerhalb des Dreharms ausgebildet ist. Beispielsweise wird die gesamte Abluft des pneumatischen Rüttlers in das Innere des ersten Gehäuses geleitet und dann über den zweiten Abschnitt, von welchem ein Teil beispielsweise innerhalb des Dreharms ausgebildet ist, ins Freie geleitet. In diesem Fall bleibt die Atmosphäre im Inneren der Reinigungskammer unbeeinflusst von der sauerstoffhaltigen Abluft des Rüttlers.

Der Dreharm ist bevorzugt U-förmig ausgebildet, mit zwei in Gebrauchslage der Reinigungsvorrichtung gesehen in beabstandeten vertikalen Ebenen angeordneten Stehschenkeln, einem ersten Stehschenkel und einem zweiten Stehschenkel, und einem ersten Enden der Stehschenkel zwischengeordneten und in Gebrauchslage der Reinigungsvorrichtung gesehen horizontalen Querschenkel, wobei wenigstens der erste Motor, die erste Antriebswelle und der Drehteller an dem Querschenkel des Dreharms gelagert sind. Durch diese Maßnahmen ergibt sich eine sehr kompakte Bauweise, wodurch die Reinigungskammer vorteilhaft klein ausfallen kann.

Dabei kann ein zweites, vom ersten Ende wegweisendes Ende des ersten Stehschenkels an die zweite Antriebswelle angekoppelt sein, welche in einem ersten Drehlager rotatorisch gelagert ist, und von einem zweiten, vom ersten Ende des zweiten Stehschenkels wegweisenden Ende des zweiten Stehschenkels ein Lagerzapfen senkrecht abgekröpft ist, welcher in einem zweiten Drehlager rotatorisch gelagert ist, wobei das erste Drehlager und das zweite Drehlager koaxial in Bezug zur zweiten Drehachse angeordnet sind.

Dann wird die Gesamtabluft des pneumatischen Rüttlers beispielsweise entweder über den ersten Abschnitt des Abluftkanals in das erste Gehäuse geleitet oder über den zweiten Abschnitt des Abluftkanals aus der Reinigungskammer heraus und bevorzugt über den Dreharm beispielsweise in die Atmosphäre.

Gemäß einer weiterbildenden Maßnahme kann der zweite Motor über ein zweites Getriebe eine zweite Antriebswelle antreiben, welche mit dem Dreharm verbunden und koaxial mit der zweiten Drehachse ist. Das zweite Getriebe wird bevorzugt durch ein zweites Riemenvorgelege-Getriebe gebildet. Riemenvorgelege-Getriebe haben den Vorteil, dass sie schwingungsdämpfend wirken.

In besonders zu bevorzugender Weise ist die Reinigungskammer staubdicht und wird durch statische Wände begrenzt, welche eine verschließbare Öffnung zum Be- und Entladen des Objekts aufweisen.

Ein unabhängiger erfinderischer Gedanken geht von einer Reinigungsvorrichtung zur Reinigung von dreidimensionalen Objekten aus, welche durch schichtweises Aufbringen und selektives Verfestigen eines pulverförmigen Aufbaumaterials hergestellt worden sind, von umgebendem, unverfestigt gebliebenem pulverförmigen Aufbaumaterial. Die Reinigungsvorrichtung umfasst einen ersten Motor, welcher über wenigstens eine erste Antriebswelle einen Drehteller rotatorisch treibt, auf welchem das Objekt lösbar spannbar ist, wobei der Drehteller in einer Reinigungskammer angeordnet ist, in welcher die Reinigung des Objekts stattfindet. Wenigstens der Drehteller, der erste Motor, und die erste Antriebswelle sind an einem Dreharm mitdrehend gelagert, welcher wenigstens teilweise innerhalb der Reinigungskammer angeordnet ist und welcher durch einen zweiten Motor um eine zweite Drehachse drehbar angetrieben ist, welche senkrecht in Bezug zu einer ersten Drehachse ist, um welche der Drehteller durch den ersten Motor drehbar angetrieben ist. Der Dreharm ist dabei U-förmig ausgebildet, mit zwei in Gebrauchslage der Reinigungsvorrichtung gesehen in beabstandeten vertikalen Ebenen angeordneten Stehschenkeln und einem ersten Enden der Stehschenkel zwischengeordneten und in Gebrauchslage der Reinigungsvorrichtung gesehen horizontalen Querschenkel.

Dabei kann ein zweites, vom ersten Ende wegweisendes Ende eines ersten Stehschenkels senkrecht an die zweite Antriebswelle angekoppelt sein. Die zweite Antriebswelle ist dann beispielsweise in einem ersten Drehlager rotatorisch gelagert, welches koaxial mit der zweiten Drehachse ist. Weiterhin kann von einem zweiten, vom ersten Ende wegweisende Enden eines zweiten Stehschenkels des Dreharms ein Lagerzapfen senkrecht abgekröpft sein, welcher in einem zweiten Drehlager rotatorisch gelagert ist. Das zweite Drehlager ist wie das erste Drehlager beispielsweise ebenfalls koaxial in Bezug zur zweiten Drehachse.

Weiterhin kann in dem Lagerzapfen eine Strömungsverbindung zwischen der Reinigungskammer und einer Saugvorrichtung ausgebildet sein, durch welche die Saugvorrichtung unverfestigtes Aufbaumaterial aus der Reinigungskammer absaugt.

Gemäß einer Weiterbildung ist der Drehteller durch den ersten Motor um die erste Drehachse in einem Winkelbereich von 0 Grad bis 360 Grad und der Dreharm durch den zweiten Motor in einem zweiten Winkelbereich von 0 Grad bis 360 Grad drehbar angetrieben.

Durch die in dem weiteren unabhängigen erfinderischen Gedanken enthaltenen Maßnahmen ergibt sich eine einfache bauliche Möglichkeit, das auf dem Drehteller lösbar gespannte Objekt um zwei Drehachsen und in einem jeweils maximalen Winkelbereich zu drehen, um ein Ablösen von unverfestigt gebliebenem Aufbaumaterial zu von dem Objekt unterstützen. Weiterhin ergibt sich durch diese Maßnahmen eine sehr kompakte Bauweise, wodurch die Reinigungskammer vorteilhaft klein ausfallen kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: eine perspektivische Draufsicht einer Reinigungsvorrichtung gemäß einer bevorzugten Ausführungsform nach der Erfindung;
- Fig. 2: eine perspektivische Unteransicht der Reinigungsvorrichtung von Fig.1;
- Fig. 3: eine Schnittdarstellung der Reinigungsvorrichtung von Fig.1;
- Fig. 4: einen vergrößerten Ausschnitt aus Fig.3;
- Fig. 5: einen vergrößerten Ausschnitt einer Querschnittdarstellung einer Reinigungsvorrichtung gemäß einer weiteren Ausführungsform;
- Fig. 6: eine Querschnittdarstellung einer Reinigungsvorrichtung gemäß einer weiteren Ausführungsform.

### Beschreibung der Ausführungsbeispiele

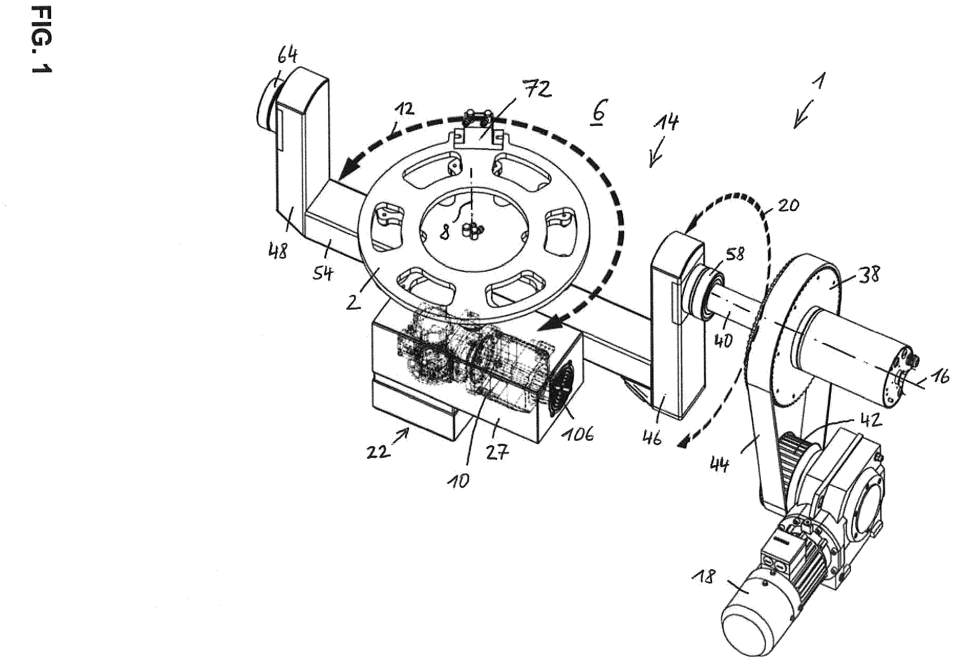

Fig. 1 zeigt eine perspektivische Darstellung einer bevorzugten Ausführungsform einer Reinigungsvorrichtung 1, durch welche unverfestigt gebliebenes pulverförmiges Aufbaumaterial von einem hier nicht gezeigten dreidimensionalen Objekt gereinigt wird. Das Objekt, beispielsweise ein Bauteil oder ein Modell ist auf einer hier ebenfalls nicht gezeigten Bauplattform durch schichtweises Aufbringen und selektives Verfestigen des pulverförmigen Aufbaumaterials hergestellt worden. Im hier vorliegenden Fall wurde das selektive Verfestigen des pulverförmigen Aufbaumaterials mittels energiereicher Strahlung, hier insbesondere mittels einer Lasersinterung (Laserstrahlung) vorgenommen.

Die Reinigung soll hier lediglich das Entfernen von Restpulver betreffen, welches nach dem Auspacken des Objekts aus dem Pulverkuchen noch anhaftet. Die Reinigungsvorrichtung 1 wird beispielsweise durch eine hier nicht gezeigte elektronische Steuereinrichtung in koordinierter Weise gesteuert, welche eine CPU beinhaltet, deren Betrieb durch ein Computerprogramm gesteuert wird.

Der Bauprozess und der Reinigungsprozess werden hier beispielsweise an voneinander getrennten Orten und in voneinander getrennten Vorrichtungen, nämlich in einer hier nicht gezeigten Schichtbauvorrichtung und der hier gezeigten Reinigungsvorrichtung 1 vollzogen.

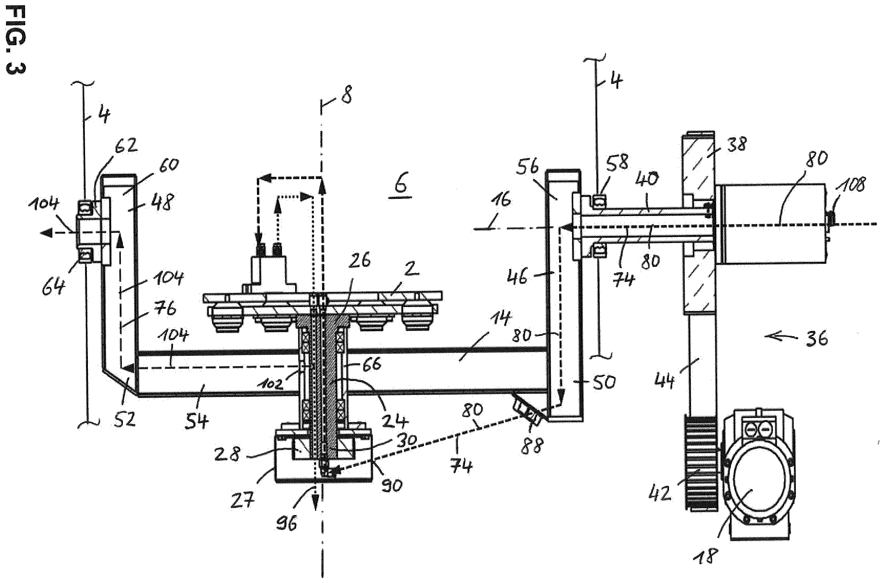

Das Objekt ist während des Reinigungsprozesses in der Reinigungsvorrichtung 1 über hier eine hier nicht gezeigte Spanneinrichtung auf einem Drehteller 2 der Reinigungsvorrichtung 1 eingespannt. Die Reinigungsvorrichtung 1 umfasst eine hier in **Fig. 3** durch eine Wandung 4 angedeutete staubdichte Reinigungskammer 6, in welcher der Reinigungsprozess stattfindet und welche eine hier nicht gezeigte verschließbare Öffnung zum Be- und Entladen des Objekts aufweist.

Wie **Fig. 1** zeigt, ist der Drehteller 2 hier beispielsweise um eine erste Drehachse 8 mittels eines ersten Motors 10 drehend antreibbar, insbesondere in einem Winkel von 0 bis 360 Grad, wie der erste teilkreisförmige Pfeil 12 symbolisiert. Weiterhin ist der Drehteller 2 an einem Dreharm 14 gelagert, der um eine zweite Drehachse 16 mittels eines zweiten Motors 18 drehbar, wie der zweite teilkreisförmige Pfeil 20 symbolisiert, wobei die zweite Drehachse 16 senkrecht zur ersten Drehachse 8 ist.

Der Drehteller 2 wird durch den ersten Motor 10 um die erste Drehachse 8 beispielsweise in einem Winkelbereich von 0 Grad bis 360 Grad und der Dreharm 14 durch den zweiten Motor 18 in einem zweiten Winkelbereich von beispielsweise 0 Grad bis 360 Grad drehbar angetrieben. Der erste Motor 10 und der zweite Motor 18 sind bevorzugt Servomotoren, welche von einer elektronischen Steuerung gesteuert werden, um gewünschte Drehlagen des Drehtellers 2 und damit des Objekts zu erzielen. Dadurch kann das auf dem Drehteller 2 gespannte Objekt in eine Vielzahl von Positionen gedreht werden, was ein Lösen von losem, nicht verfestigtem pulverförmigen Aufbaumaterial durch die Reinigungsvorrichtung 1 fördert. Daneben umfasst die Reinigungsvorrichtung beispielsweise eine hier nicht gezeigte Absaugvorrichtung zum Absaugen von gelöstem Pulvermaterial aus der Reinigungskammer.

Der erste Motor 10 treibt über ein erstes Getriebe 22 eine erste Antriebswelle 24, welche beispielsweise koxial und mit ihrem ersten Ende 26 direkt mit dem Drehteller 2 verbunden ist. Das erste Getriebe 22 wird bevorzugt durch ein erstes Riemenvorgelege-Getriebe gebildet. Der erste Motor 10 und das erste Getriebe 22 sind bevorzugt in einem ersten Gehäuse 27 gehaust, welches hier beispielsweise zweiteilig ausgeführt ist, wobei in einem ersten Teil der erste Motor 10 und in einem zweiten Teil das erste Getriebe 22 gehaust ist.

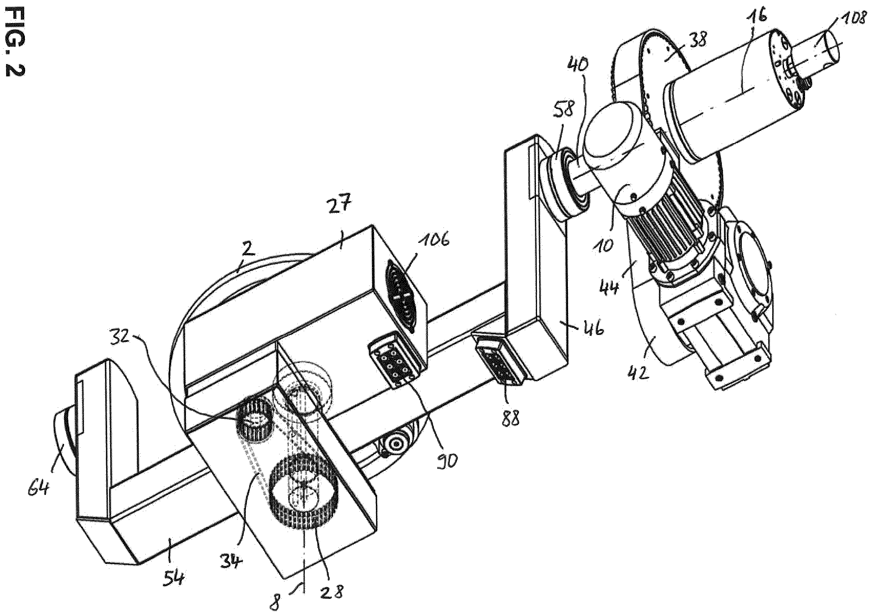

Der erste Motor 10 treibt über das erste Getriebe 22 die erste Antriebswelle 24 rotatorisch an. Wie **Fig. 2** zeigt, ist dabei ein erstes Antriebsritzel 28 koaxial an einem zweiten Ende 30 der ersten Antriebswelle 24 drehfest gelagert und ein erstes Motorritzel 32 koaxial an einem Läufer des ersten Motors 10, wobei die Drehbewegung des ersten Motorritzels 32 über einen ersten Riemen 34 auf das erste Antriebsritzel 28 und von dort auf die erste Antriebswelle 24 übertragen wird. Das erste Getriebe umfasst daher das erste Motorritzel, den ersten Riemen 34 und das erste Antriebsritzel 28.

Der zweite Motor 18 treibt über ein zweites Getriebe 36, hier beispielsweise ebenfalls ein Riemenvorgelege-Getriebe den Dreharm 14 rotatorisch an. Dabei ist ein zweites Antriebsritzel 38 koaxial an einer zweiten Antriebswelle 40 drehfest gelagert und ein zweites Motorritzel 42 koaxial an einem Läufer des zweiten Motors 18, wobei die Drehbewegung des zweiten Motorritzels 42 über einen zweiten Riemen 44 auf das zweite Antriebsritzel 38 und von dort auf die zweite Antriebswelle 40 übertragen wird.

Der Dreharm 14 ist beispielsweise U-förmig ausgebildet, mit zwei in Gebrauchslage der Reinigungsvorrichtung 1 gesehen in beabstandeten vertikalen Ebenen angeordneten ersten und zweiten Stehschenkeln 46, 48 und einem ersten Enden 50, 52 der Stehschenkel 46, 48 zwischengeordneten und in Gebrauchslage der Reinigungsvorrichtung 1 gesehen horizontalen Querschenkel 54.

Dabei ist ein zweites, vom ersten Ende 50 wegweisendes Ende 56 eines ersten Stehschenkels 46 senkrecht an die zweite Antriebswelle 40 drehfest angekoppelt. Die zweite Antriebswelle 40 ist in einem ersten Drehlager 58 rotatorisch gelagert, welches koaxial mit der zweiten Drehachse 16 ist (**Fig. 3**). Weiterhin ist von einem zweiten, von einem ersten Ende 52 wegweisenden Ende 60 eines zweiten Stehschenkels 48 des Dreharms 14 ein Lagerzapfen 62 senkrecht abgekröpft, welcher in einem zweiten Drehlager 64 rotatorisch gelagert ist. Das zweite Drehlager 64 ist wie das erste Drehlager 58 ebenfalls koaxial in Bezug zur zweiten Drehachse 16. Damit ist hier beispielsweise eine beidseitige rotatorische Lagerung des Dreharms 14 in zwei Drehlagern 58, 64 realisiert. Denkbar ist aber auch, dass der Dreharm 14 lediglich einseitig, hier beispielsweise lediglich an dem ersten Drehlager 58 frei auskragend gelagert ist und dann der zweite Stehschenkel 48 und das zweite Drehlager 64 entfallen.

Vorzugsweise sind das erste Gehäuse 27 mit dem ersten Motor 10 und dem ersten Getriebe 22, die erste Antriebswelle 24, ein Wellengehäuse 66 der ersten Antriebswelle 34 und der Drehteller 2 etwa mittig an dem Querschenkel 54 des Dreharms 14 gelagert. Hierbei ist beispielsweise die erste Antriebswelle 24 senkrecht in Bezug zu dem Querschenkel 54 des Dreharms 14 angeordnet. Die erste Antriebswelle 24 ist weiterhin in dem Wellengehäuse 66, welches senkrecht den Querschenkel 54 durchsetzt mittels zweier Radial- und Axiallager 68 gelagert. Zwischen einer radial äußeren Umfangsfläche der ersten Antriebswelle 24 und einer radial inneren Umfangsfläche des Wellengehäuses 66 wird ein Ringraum 70 ausgebildet. Das Wellengehäuse 66 ist mit seinem vom Drehteller 2 weg weisenden Ende an dem ersten Gehäuse 27 befestigt, wobei die erste Antriebswelle 24 durch eine Öffnung im ersten Gehäuse 27 ragt, um mit ihrem zweiten Ende 30 koaxial mit dem ersten Antriebsritzel 28 verbunden zu sein. Das erste Ende 26 der ersten Antriebswelle 24 ragt aus dem Wellengehäuse heraus und ist dann beispielsweise koaxial mit dem Drehteller 2 drehfest verbunden. Hier nicht explizit gezeigte Dichtungen sorgen dafür, dass aus der Reinigungskammer 6 kein Pulver in das Wellengehäuse 66 eindringen kann.

Auf dem Drehteller 2 ist ein pneumatischer Rüttler 72 als weiterer Teil der Reinigungsvorrichtung 1 angeordnet, welcher den Drehteller 2 und damit auch das darauf gespannte Objekt in Vibrationen versetzt, um lose Pulverpartikel von dem Objekt abzulösen. Die Steuerung des Rüttlers 72 erfolgt wiederum durch die elektronische Steuereinrichtung der Reinigungsvorrichtung 1, durch welche der Rüttler 72 bei Bedarf aktiviert wird.

Genauer ist der pneumatische Rüttler 72 hier beispielsweise auf einer zum Objekt weisenden Oberfläche des Drehtellers 2 beispielsweise derart randseitig angeordnet, dass er den Drehteller 2 in Vibrationen versetzen kann, wobei der Rüttler 72 mit unter Druck stehender, in einem Zuluftkanal 74 geführter Zuluft versorgbar (belüftbar) und von unter Druck stehender in einem in **Fig. 3**, **Fig. 4** und **Fig.6** durch gepunktete Linien symbolisierten Abluftkanal 76 geführter Abluft entlastbar (entlüftbar) ist. Die Betriebsweise eines solchen pneumatischen Rüttlers 72 ist hinreichend bekannt, deshalb soll hier nicht weiter darauf eingegangen werden.

Die Zuluft für den Rüttler wird hier über den in **Fig. 3**, **Fig. 4** und **Fig. 6** durch gestrichelte Linien symbolisierten Zuluftkanal 74 geführt wird, von welchem ein erster Abschnitt 78 innerhalb der ersten Antriebswelle 24 ausgebildet ist, welcher in Bezug auf die Antriebswelle 24 koaxial angeordnet ist. Insbesondere ist ein zweiter Abschnitt 80 des Zuluftkanals 74, welcher nicht mit der ersten Antriebswelle 24 mitdreht mit dem ersten Abschnitt 78 des Zuluftkanals 74 über eine koaxial in Bezug zur ersten Antriebswelle 24 angeordnete erste Drehdurchführung 82 verbunden, welche innerhalb des ersten Gehäuses 27 angeordnet ist. Der zweite Abschnitt 80 des Zuluftkanals 74 steht zuströmseitig über eine zweite Drehdurchführung 108 mit einer hier nicht gezeigten Druckluftquelle, beispielsweise mit einem Kompressor oder einem Druckluftvorrat in Verbindung, welcher unter Druck stehende Druckluft in den zweiten Abschnitt 80 des Zuluftkanals 74 einsteuert.

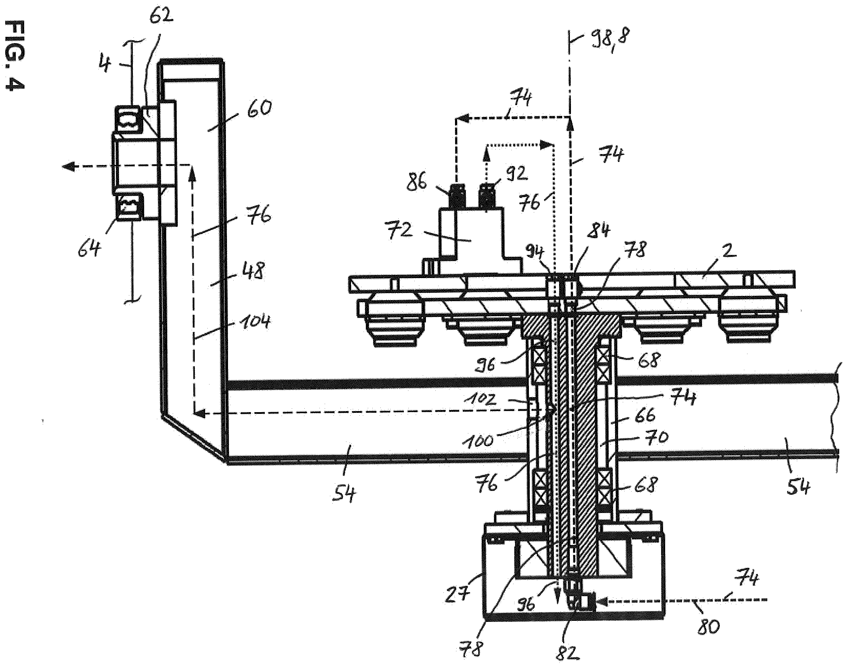

Wie am besten anhand von **Fig. 4** zu sehen, mündet der erste innerhalb der ersten Antriebswelle 24 ausgebildete Abschnitt 78 des Zuluftkanals 74 in einer Oberfläche des Drehtellers 2 und ist dort mit einem Anschluss 84 versehen, an welchen ein hier nicht gezeigter Schlauch angeschlossen ist, welcher andererseits mit an einem Zuluft-Anschluss 86 des Rüttlers 72 verbunden ist. **Fig. 3** zeigt, dass der zweite Abschnitt 80 des Zuluftkanals 74 die zweite Antriebswelle 40 beispielsweise koaxial durchsetzt und sich dann etwa senkrecht zur zweiten Antriebswelle 40 innerhalb des ersten Stehschenkels 46 erstreckt. Wie in **Fig. 2** zu sehen, mündet der zweite Abschnitt 80 des Zuluftkanals 74 etwa im Bereich des ersten Endes 50 des ersten Stehschenkels 46 beispielsweise in einen ersten Anschluss 88, an welchen neben einem hier nicht gezeigten pneumatischen Schlauch zur Weiterführung der Zuluft auch ebenfalls hier nicht gezeigte elektrische Steuer- und Energieversorgungsleitungen für den ersten Motor 10 angeschlossen sind. Andererseits sind der pneumatische Schlauch für die Zuluft und die elektrischen Steuer- und Energieversorgungsleitungen an einen zweiten, beispielsweise am ersten Gehäuse 27 ausgebildeten Anschluss 90 angeschlossen. Von dem zweiten Anschluss 90 aus wird dann die Zuluft in die Drehdurchführung 82 weitergeführt und von dort in den ersten Abschnitt 78 des Zuluftkanals 74. Der pneumatische Schlauch bildet somit einen Teil des zweiten Abschnitts 80 des Zuluftkanals 74 aus. Damit ist bevorzugt ein Teil des zweiten Abschnitts 80 des Zuluftkanals 74 außerhalb der zweiten Antriebswelle 40 und außerhalb des Dreharms 14 angeordnet.

Der Zuluftkanal 74 für den pneumatischen Rüttler 72 ist bevorzugt gegenüber der Reinigungskammer 6 abgedichtet, damit kein pulverförmiges Aufbaumaterial in den Rüttler 72 eindringen kann.

Die Abluft des Rüttlers wird über den Abluftkanal 76 geführt. Hierzu ist ein Abluftanschluss 92 des Rüttlers 72, in welchen die Abluft eingespeist wird, über einen hier nicht gezeigten Schlauch mit einem an der Oberfläche des Drehtellers 2 ausgebildeten Anschluss 94 verbunden, welcher mit einem ersten Abschnitt 96 des Abluftkanals 76 verbunden ist, welcher ebenfalls innerhalb der ersten Antriebswelle 24 ausgebildet ist. Der erste Abschnitt 96 des Abluftkanals 76 ist vorzugsweise parallel zu einer Mittelachse 98 der ersten Antriebswelle 24 und damit auch zum ersten Abschnitt 78 des Zuluftkanals 74 angeordnet, aber eben nicht koaxial in Bezug zur Mittelachse 98 sondern exzentrisch. Über eine Querbohrung 100 steht der erste Abschnitt 96 des Abluftkanals 76 mit dem Ringraum 70 in Strömungsverbindung, wobei in dem Wellengehäuse 66 eine

Öffnung 102 ausgebildet ist, welche mit einem zweiten Abschnitt 104 des Abluftkanals 76 verbunden ist, welcher beispielsweise innerhalb des Dreharms 14 ausgebildet ist. Genauer erstreckt sich der zweite Abschnitt 104 des Abluftkanals 76 durch den horizontalen Querschenkel 54, den zweiten Stehschenkel 48 und den Lagerzapfen 62 hindurch und damit auch durch die Wandung 4 der Reinigungskammer 6 und mündet schließlich ins Freie bzw. die Umgebung der Reinigungsvorrichtung 1.

Andererseits erstreckt sich der erste Abschnitt 96 des Abluftkanals 76 innerhalb der ersten Antriebswelle 24 bis zu deren zweitem Ende 30 und mündet in das erste Gehäuse 27. Folglich verzweigt sich der Abluftkanal 76 innerhalb der ersten Antriebswelle 24 an der Querbohrung 100, so dass hier wahlweise Abluft über den ersten Abschnitt 96 des Abluftkanals 76 in das erste Gehäuse 27 eingeleitet und/oder über den zweiten Abschnitt 104 des Abluftkanals 76 in Freie abgelassen werden kann.

Eine Einleitung von sauerstoffhaltiger Abluft in das erste Gehäuse 27 und dann über einen Filter 106 in die Reinigungskammer 6 sollte vermieden werden, falls in der Reinigungskammer 6 eine stark pulverstaubhaltige Atmosphäre und folglich Explosionsgefahr herrscht. In diesem Fall wird beispielsweise die gesamte Abluft des Rüttlers 72 über den zweiten Abschnitt 104 des Abluftkanals 76 ins Freie geleitet, wobei dann in Strömungsrichtung gesehen hinter der Querbohrung 100 der erste Abschnitt 96 des Abluftkanals 76 verschlossen wird. In diesem Fall erfolgt die Kühlung des ersten Motors 10 und des ersten Getriebes 22 vorzugsweise durch ein inertes Schutzgas, welches in das erste Gehäuse 27 entsprechend eingeführt wird, wobei das Schutzgas dann ebenfalls über den Filter 106 in die Reinigungskammer 6 abgeblasen wird. Durch das nicht brennbare Schutzgas, z.B. Stickstoff wird dann zum einen die Explosionsgefahr reduziert, welche durch das mit dem Luftsauerstoff vermischte lose Pulver innerhalb der Reinigungskammer 6 entsteht. Zum andern wird mit Hilfe des Druckgefälles des Schutzgases zwischen dem Inneren des ersten Gehäuses 22 und der Reinigungskammer 6 nach Art einer Sperrluftdichtung verhindert, dass Pulverpartikel von der Reinigungskammer 6 ins Innere des ersten Gehäuses 22 gelangen kann.

Falls aber eine Einleitung von sauerstoffhaltiger Abluft in die Reinigungskammer 6 problemlos ist, kann die gesamte Abluft des Rüttlers über den ersten Abschnitt 96 des Abluftkanals 76, das erste Gehäuse 22 sowie den Filter 106 ins Innere der Reinigungskammer 6 geleitet werden. Die Querbohrung 100 wird dann verschlossen.

Möglich ist, auch, dass ein Teil der Abluft über den ersten Abschnitt 96 des Abluftkanals 76 in die Reinigungskammer 6 und der restliche Teil der Abluft über den zweiten Abschnitt 104 des Abluftkanals 76 ins Freie geleitet wird. Hierzu kann die Querbohrung 100 mit einem entsprechenden Strömungsquerschnitt versehen werden.

Der erste Teil der Abluft, welcher über den ersten Abschnitt 96 des Abluftkanals 76 in das erste Gehäuse 27 eingeleitet wird, wird in vorteilhafter Weise zur Kühlung des ersten Motors 10 und des ersten Getriebes 22 genutzt. Hierzu ist innerhalb des ersten Gehäuses 27 eine entsprechend ausgebildete Strömungsführung vorgesehen, welche den ersten Teil der Abluft in Richtung auf den ersten Motor 10 und das erste Getriebe 22 lenkt. Von dort wird dann der erste Teil der Abluft über eine Öffnung im ersten Gehäuse, in welcher der Filter 106 angeordnet ist, in die Reinigungskammer 6 abgeblasen (**Fig. 1** und **Fig. 2**).

Der Filter 106 sorgt dann dafür, dass kein loses Pulvermaterial in das erste Gehäuse 27 eindringen und die dort gehausten Baugruppen, beispielsweise den ersten Motor 10 verschmutzen kann. Insofern ist auch der Abluftkanal 76 gegenüber der Reinigungskammer 6 abgedichtet. Weiterhin sorgt der unter Druck stehende erste Teil der Abluft innerhalb des ersten Gehäuses 27 dafür, dass infolge des Druckgefälles kein pulverförmiges Aufbaumaterial ins Innere des ersten Gehäuses 27 nach Art einer Sperrluftdichtung eindringen kann.

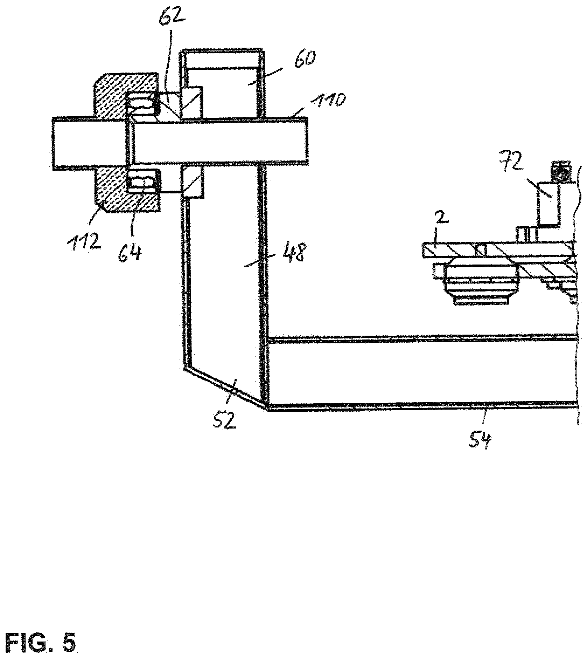

Bei einer in **Fig. 5** gezeigten Ausführungsform ist innerhalb des Lagerzapfens 62, welcher in dem zweiten Drehlager 64 gelagert ist, nicht nur ein Teil des zweiten Abschnitts 104 des Abluftkanals 76 wie bei der Ausführungsform von **Fig. 4** ausgebildet, sondern separat davon zusätzlich eine Strömungsverbindung 110 zwischen einem Pulverpartikelsauger 112 und dem Inneren der Reinigungskammer 6. Die Strömungsverbindung 110 ist beispielsweise rohrförmig. Damit ist der Pulverpartikelsauger 112, welcher beispielsweise außerhalb der Wandung 4 der Reinigungskammer 6 im Bereich des zweiten Drehlagers 64 angeordnet ist, in der Lage Pulverpartikel aus der Reinigungskammer 6 anzusaugen und in einem Behältnis zu sammeln.

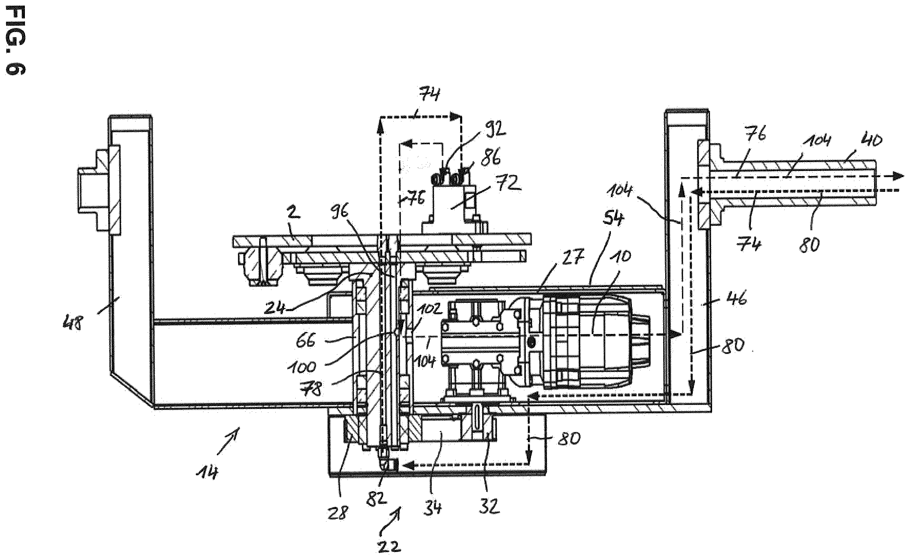

Bei einer in **Fig. 6** gezeigten Ausführungsform ist das erste Gehäuse 27 innerhalb des Querschenkels 54 des Dreharms 14 aufgenommen und der zweite Abschnitt 104 des Abluftkanals 76, welcher wie bei den vorangehend beschriebenen Ausführungsformen von dem ersten Abschnitt 96 des Abluftkanals 76 an der Querbohrung 100 abzweigt. Ein Teil des zweiten Abschnitts 104 erstreckt sich dann durch die Öffnung 102 im Wellengehäuse 66 hindurch und mündet dann in das Innere des ersten Gehäuses 27, wobei hier beispielsweise die gesamte Abluft des pneumatischen Rüttlers 72 in das Innere des ersten Gehäuses 27 geleitet wird. Das Innere des ersten Gehäuses 27, welches den ersten Motor 10 haust, ist dann mit einem weiteren Teil des zweiten Abschnitts 104 verbunden, welcher innerhalb des Dreharms 14 und insbesondere in dem ersten Stehschenkel 46 ausgebildet und dann sich dann durch die zweite Antriebswelle hindurch erstreckt, um ins Freie zu münden. Die ins Innere des ersten Gehäuses 27 geleitete Abluft des Rüttlers 72 kühlt dann wiederum den dort gehausten ersten Motor 10, wobei aber im Gegensatz zu den vorangehend beschriebenen Ausführungsformen die gesamte Abluft über das Innere der zweiten Antriebswelle 40 aus der Reinigungskammer 6 heraus geleitet wird. Der Zuluftkanal 74 erstreckt sich wiederum mittels seines zweiten Abschnitts 80 durch die zweite Antriebswelle 40 und durch den ersten Stehschenkel 46 hindurch, um in das erste Gehäuse 27 zu münden. Von dort wird die Zuluft am ersten Getriebe 22 vorbei in die erste Drehdurchführung 82 und von dort wiederum in den ersten Abschnitt 78 des Zuluftkanals 74 geleitet, welcher mit dem Zuluft-Anschluss 86 des Rüttlers 72 verbunden ist. Ansonsten sind wie weiteren Bauteile und Baugruppen wie bei den vorangehend beschriebenen Ausführungsformen ausgebildet.

### Bezugszahlenliste

- 1: Reinigungsvorrichtung
- 2: Drehteller
- 4: Wandung
- 6: Reinigungskammer
- 8: erste Drehachse
- 10: erster Motor
- 12: erster teilkreisförmiger Pfeil
- 14: Dreharm
- 16: zweite Drehachse
- 18: zweiter Motor
- 20: zweiter teilkreisförmiger Pfeil
- 22: erstes Getriebe
- 24: erste Antriebswelle
- 26: erstes Ende
- 27: Gehäuse
- 28: erstes Antriebsritzel
- 30: zweites Ende
- 32: erstes Motorritzel
- 34: erster Riemen
- 36: zweites Getriebe
- 38: zweites Antriebsritzel
- 40: zweite Antriebswelle
- 42: zweites Motorritzel
- 44: zweiter Riemen
- 46: erster Stehschenkel
- 48: zweiter Stehschenkel
- 50: erstes Ende
- 52: erstes Ende
- 54: Querschenkel
- 56: zweites Ende
- 58: erstes Drehlager
- 60: zweites Ende
- 62: Lagerzapfen
- 64: zweites Drehlager
- 66: Wellengehäuse
- 68: Radial- und Axiallager
- 70: Ringraum
- 72: Rüttler
- 74: Zulaufkanal
- 76: Abluftkanal
- 78: erster Abschnitt Zulaufkanal
- 80: zweiter Abschnitt Zulaufkanal
- 82: erste Drehdurchführung
- 84: Anschluss
- 86: Zuluftanschluss
- 88: erster Anschluss
- 90: zweiter Anschluss
- 92: Abluftanschluss
- 94: Anschluss
- 96: erster Abschnitt Abluftkanal
- 98: Mittelachse
- 100: Querbohrung
- 102: Öffnung
- 104: zweiter Abschnitt Abluftkanal
- 106: Filter
- 108: zweite Drehdurchführung
- 110: Strömungsverbindung
- 112: Pulverpartikelsauger

## Patentansprüche

1. Reinigungsvorrichtung (1) zur Reinigung von dreidimensionalen Objekten, welche durch schichtweises Aufbringen und selektives Verfestigen eines pulverförmigen Aufbaumaterials hergestellt worden sind, von umgebendem, unverfestigt gebliebenem pulverförmigen Aufbaumaterial, mit einem ersten Motor (10), welcher über wenigstens eine erste Antriebswelle (24) einen Drehteller (2) rotatorisch treibt, auf welchem das Objekt lösbar spannbar ist, wobei der Drehteller (2) in einer Reinigungskammer (6) angeordnet ist, in welcher die Reinigung des Objekts stattfindet, und mit einem derart auf oder an dem Drehteller (2) angeordneten pneumatisch betätigten Rüttler (72), dass er den Drehteller (2) in Vibrationen versetzt, wobei der Rüttler (72) mit unter Druck stehender Zuluft versorgbar und von unter Druck stehender Abluft entlastbar ist, **dadurch gekennzeichnet, dass**
a) wenigstens ein Teil der Zuluft über einen Zuluftkanal (74) geführt wird, von welchem ein erster Abschnitt (78) innerhalb der ersten Antriebswelle (24) ausgebildet ist, welcher in Bezug auf die erste Antriebswelle (24) koaxial angeordnet ist, und dass
b) wenigstens ein Teil der Abluft über wenigstens einen Abluftkanal (76) geführt wird, von welchem ein erster Abschnitt (96) innerhalb der ersten Antriebswelle (24) ausgebildet ist.

2. Reinigungsvorrichtung nach Anspruch 1, **dadurch gekennzeichnet, dass** der erste Abschnitt (96) des wenigstens einen Abluftkanals (76) exzentrisch und parallel in Bezug zu einer Mittelachse (98) der ersten Antriebswelle (24) angeordnet ist.

3. Reinigungsvorrichtung nach Anspruch 2, **dadurch gekennzeichnet, dass** eine Mündung des ersten Abschnitts (96) des wenigstens einen Abluftkanals (76) im Inneren eines ersten Gehäuses (27) mündet, welches wenigstens den ersten Motor (10) haust.

4. Reinigungsvorrichtung nach Anspruch 3, **dadurch gekennzeichnet, dass** durch den ersten Abschnitt (96) des wenigstens einen Abluftkanals (76) geführte Abluft des pneumatischen Rüttlers (72) im Inneren des ersten Gehäuses (27) derart geführt ist, dass sie den ersten Motor (10) kühlt.

5. Reinigungsvorrichtung nach Anspruch 3 oder 4, **dadurch gekennzeichnet, dass** in das Innere des ersten Gehäuses (27) ein inertes Schutzgas derart eingeführt wird, dass es den ersten Motor (10) kühlt.

6. Reinigungsvorrichtung nach einem der Ansprüche 3 bis 5, **dadurch gekennzeichnet, dass** das Innere des ersten Gehäuses (27) über einen Filter (106) mit der Reinigungskammer (6) verbunden ist.

7. Reinigungsvorrichtung nach einem der vorhergehenden Ansprüche, **dadurch gekennzeichnet, dass** wenigstens der Drehteller (2), der erste Motor (10) und die erste Antriebswelle (24) an einem Dreharm (14) mitdrehend gelagert sind, welcher mit einer zweiten Antriebswelle (40) verbunden ist, welche durch einen zweiten Motor (18) um eine zweite Drehachse (16) koaxial angetrieben ist, welche senkrecht in Bezug zu einer ersten Drehachse (8) ist, um welche der Drehteller (2) durch den ersten Motor (10) drehbar angetrieben ist.

8. Reinigungsvorrichtung nach Anspruch 7, **dadurch gekennzeichnet, dass** das erste Gehäuse (27) innerhalb des Dreharms (14) angeordnet ist oder durch eine Wandung des Dreharms (14) gebildet wird.

9. Reinigungsvorrichtung nach Anspruch 7 oder 8, **dadurch gekennzeichnet, dass** ein zweiter Abschnitt (80) des Zuluftkanals (74) mit dem Dreharm (14) mitdrehend ausgebildet und mit dem ersten Abschnitt (78) des Zuluftkanals (74) über eine koaxial in Bezug zur ersten Antriebswelle (24) angeordnete erste Drehdurchführung (82) verbunden ist.

10. Reinigungsvorrichtung nach Anspruch 9, **dadurch gekennzeichnet, dass** ein Teil des zweiten Abschnitts (80) des Zuluftkanals (74) innerhalb des Dreharms (14) ausgebildet ist.

11. Reinigungsvorrichtung nach Anspruch 9 oder 10, **dadurch gekennzeichnet, dass** ein Teil des zweiten Abschnitts (80) des Zuluftkanals (74) innerhalb der zweiten Antriebswelle (40) ausgebildet und über eine zweite Drehdurchführung (108) mit einer Druckluftquelle verbunden ist.

12. Reinigungsvorrichtung nach einem der Ansprüche 7 bis 11, **dadurch gekennzeichnet, dass** Abluft des pneumatischen Rüttlers (72) über einen zweiten Abschnitt (104) des Abluftkanals (76) aus der Reinigungskammer (6) herausgeleitet wird, wobei der zweite Abschnitt (104) des Abluftkanals (76) von dem ersten Abschnitt (96) des Abluftkanals (76) abzweigt und wenigstens teilweise innerhalb des Dreharms (14) ausgebildet ist.

13. Reinigungsvorrichtung nach einem der Ansprüche 7 bis 12, **dadurch gekennzeichnet, dass** der zweite Motor (18) über ein zweites Getriebe (36) die zweite Antriebswelle (40) antreibt.

14. Reinigungsvorrichtung nach einem der Ansprüche 7 bis 13, **dadurch gekennzeichnet, dass** der Dreharm (14) U-förmig ausgebildet ist, mit zwei in Gebrauchslage der Reinigungsvorrichtung (6) gesehen in beabstandeten vertikalen Ebenen angeordneten Stehschenkeln, einem ersten Stehschenkel (46) und einem zweiten Stehschenkel (48), und einem ersten Enden 50, 52) der Stehschenkel (46, 48) zwischengeordneten und in Gebrauchslage der Reinigungsvorrichtung (6) gesehen horizontalen Querschenkel (54), wobei wenigstens der erste Motor (10), die erste Antriebswelle (24) und der Drehteller (2) an dem Querschenkel (54) des Dreharms (14) gelagert sind.

15. Reinigungsvorrichtung nach Anspruch 14, **dadurch gekennzeichnet, dass** ein zweites, vom ersten Ende (50) wegweisendes Ende (56) des ersten Stehschenkels (46) an die zweite Antriebswelle (40) angekoppelt ist, welche in einem ersten Drehlager (58) rotatorisch gelagert ist, und von einem zweiten, vom ersten Ende (52) des zweiten Stehschenkels (48) wegweisenden Ende (60) des zweiten Stehschenkels (48) ein Lagerzapfen (62) senkrecht abgekröpft ist, welcher in einem zweiten Drehlager (64) rotatorisch gelagert ist, wobei das erste Drehlager (58) und das zweite Drehlager (64) koaxial in Bezug zur zweiten Drehachse (16) angeordnet sind.

16. Reinigungsvorrichtung nach Anspruch 15, **dadurch gekennzeichnet, dass** in dem Lagerzapfen (62) eine Strömungsverbindung (110) zwischen der Reinigungskammer (6) und einer Saugvorrichtung (112) ausgebildet ist, durch welche die Saugvorrichtung (112) unverfestigtes Aufbaumaterial aus der Reinigungskammer (6) absaugt.

17. Reinigungsvorrichtung nach einem der vorhergehenden Ansprüche, **dadurch gekennzeichnet, dass** durch den ersten Abschnitt (96) des wenigstens einen Abluftkanals (76) geführte Abluft des pneumatischen Rüttlers (72) in eine Druckluftreinigungseinrichtung der Reinigungsvorrichtung (1) eingespeist, durch welche die Abluft oder ein Teil davon über wenigstens eine Düse als Abluftstrahl in Richtung des Objekts ausgeblasen wird.

18. Reinigungsvorrichtung nach einem der vorhergehenden Ansprüche, **dadurch gekennzeichnet, dass** ein erstes Getriebe (22) vorgesehen ist, welches den ersten Motor (10) mit der ersten Antriebswelle (24) verbindet.

## Claims

1. A cleaning apparatus (1) for cleaning three dimensional objects which have been produced by applying a powdery construction material in layers and selectively hardening the construction material wherein the three dimensional objects are cleaned from surrounding non solidified powdery construction material, the cleaning apparatus comprising: a first motor (10) that drives a turn table (2) to rotate by at least one first drive shaft (24), wherein the a three dimensional object is removably attachable at the turn table, wherein the turn table (2) is arranged in a cleaning chamber (6) in which the object is cleaned; a pneumatically driven shaker (72) arranged on or at the turn table (2) so that the turn table (2) is caused to vibrate wherein the shaker (72) is suppliable with compressed air and relievable from compressed exhaust air, **characterized in that**
a) at least a portion of the supply air is run through a supply air channel (74) that includes a first section (78) that is arranged within the first drive shaft (24) coaxial to the first drive shaft (24), and
b) at least a portion of the exhaust air is run through at least one exhaust air channel (76) which includes a first section (96) that is formed within the first drive shaft (24).

2. The cleaning apparatus (1) according to claim 1, **characterized in that** the first section (96) of the at least one exhaust air channel (76) is arranged eccentrical and parallel with respect to a center axis (98) of the first drive shaft (24).

3. The cleaning apparatus (1) according to claim 2, **characterized in that** an outlet of the first section (96) of the at least one exhaust air channel (76) leads into an interior of a first housing (27) that includes at least the first motor (10).

4. The cleaning apparatus (1) according to claim 3, **characterized in that** exhaust air of the pneumatic shaker (72) is run through the first section (96) of the at least one exhaust air channel (76) in an interior of the first housing (27) so that the exhaust air cools the first motor (10).

5. The cleaning apparatus (1) according to claim 3 or 4, **characterized in that** an inert protective gas is introduced into the interior of the first housing (27) so that the inert gas cools the first motor (10).

6. The cleaning apparatus (1) according to one of the claims 3 - 5, **characterized in that** the interior of the first housing (27) is connected through a filter (106) with the cleaning chamber (6).

7. The cleaning apparatus (1) according to one of the preceding claims, **characterized in that** at least the turn table (2), the first motor (10) and the first drive shaft (24) are arranged at a rotating arm (14) and configured to co-rotate with the rotating arm (14) which is connected with a second drive shaft (40) which is coaxially driven by a second motor (18) to rotate about a second rotation axis (16) which is arranged perpendicular to a first rotation axis (8) wherein the turn table (2) is drivable by the first motor (10) to rotate about the first rotation axis (8).

8. The cleaning apparatus (1) according to claim 7, **characterized in that** the first housing (27) is arranged within the rotating arm (14) or formed by a wall of the rotating arm (14).

9. The cleaning apparatus (1) according to claim 7 or 8, **characterized in that** a second section (80) of the air supply channel (74) is configured to co-rotate with the rotating arm (14) and connected with the first section (78) of the air supply channel (74) through a first rotatable pass through (82) that is arranged coaxial to the first drive shaft (24).

10. The cleaning apparatus (1) according to claim 9, **characterized in that** a portion of the second section (80) of the air supply channel (74) is formed within the rotating arm (14).

11. The cleaning apparatus (1) according to claim 9 or 10, **characterized in that** a portion of the second section (80) of the air supply channel (74) is formed within the second drive shaft (40) and connected through a second rotating pass through (108) with a source for compressed air.

12. The cleaning apparatus (1) according to one of the claims 7 through 11, **characterized in that** exhaust air of the pneumatic shaker (72) is conducted through a second section (104) of the exhaust air channel (76) out of the cleaning chamber (6), wherein the second section (104) of the exhaust air channel (76) branches off from the first section (96) of the exhaust air channel (76) and is formed at least partially within the rotating arm (14).

13. The cleaning apparatus (1) according to one of the claims 7 through 12, **characterized in that** the second motor (18) drives the second drive shaft (40) through a second transmission (36).

14. The cleaning apparatus (1) according to one of the claims 7 through 13, **characterized in that** the rotating arm (14) is configured U- shaped and includes two standing arms arranged in vertical planes in an operating position of the cleaning apparatus that are offset from one another, a first standing arm (46) and a second standing arm (48) and a transversal arm (54) that is arranged between first ends (50, 52) of the standing arms (46, 48) and that is arranged horizontally in the operating position of the cleaning apparatus (1), wherein at least the first motor (10), the first drive shaft (24) and the turn table (2) are arranged at the transversal arm (54) of the rotating arm (14).

15. The cleaning apparatus (1) according to claim 14, **characterized in that a** second end (56) of the first standing arm (46) that is oriented away from the first end (50) is coupled to the second drive shaft (40) which is rotatably supported in a first rotating bearing (58) and a bearing pin (62) is arranged at a right angle relative to the second standing arm (48) at a second end (60) of the second standing arm (48) that is oriented away from the first end (52) wherein the bearing pin is rotatably supported in a second rotation bearing (64) wherein the first rotation bearing (58) and the second rotation bearing (64) are arranged coaxial relative to the second rotation axis (16).

16. The cleaning apparatus (1) according to claim 15, **characterized in that** a flow connection (110) between the cleaning chamber (6) and a suction device (112) is configured in the bearing pin (62) wherein the suction device (112) sucks non solidified construction material from the cleaning chamber (6) through the flow connection.

17. The cleaning apparatus (1) according to one of the preceding claims, **characterized in that** exhaust air of the pneumatic shaker (72) that is run through the first section (96) of the at least one exhaust air channel (76) is fed into a compressed air cleaning device of the cleaning apparatus (1) through which the exhaust air or a portion thereof is exhausted through at least one nozzle as an exhaust air jet in a direction towards the object.

18. The cleaning apparatus (1) according to one of the preceding claims, **characterized in that** a first transmission (22) connects the first motor (10) with the first drive shaft (24).

## Revendications

1. Dispositif de nettoyage (1) pour le nettoyage d'objets tridimensionnels qui ont été fabriqués par l'application en couche et la solidification sélective d'un matériau constituant sous forme de poudre, de matériau constitutif environnant sous forme de poudre resté non solidifié, avec un premier moteur (10) qui entraîne un plateau rotatif (2) en rotation par au moins un premier arbre d'entraînement (24), plateau rotatif sur lequel l'objet peut être serré de manière amovible, le plateau rotatif (2) étant placé dans une chambre de nettoyage (6) dans laquelle a lieu le nettoyage de l'objet, et avec un vibrateur (72) placé sur ou contre le plateau rotatif (2), actionné de manière pneumatique de manière à inculquer des vibrations au plateau rotatif (2), le vibrateur (72) pouvant être alimenté en air entrant sous pression et pouvant être délesté de l'air vicié sous pression, **caractérisé en ce**
a) **qu'**au moins une partie de l'air entrant est amenée par un conduit d'air entrant (74) dont un premier tronçon (78) est formé à l'intérieur du premier arbre d'entraînement (24), tronçon qui est placé coaxial par rapport au premier arbre d'entraînement (24) et
b) **qu'**au moins une partie de l'air vicié est conduit par au moins un conduit d'air vicié (76) dont un premier tronçon (96) est formé à l'intérieur du premier arbre d'entraînement (24).

2. Dispositif de nettoyage selon la revendication 1, **caractérisé en ce que** le premier tronçon (96) du au moins un conduit d'air vicié (76) est placé excentré et parallèle à un axe médian (98) du premier arbre d'entraînement (24).

3. Dispositif de nettoyage selon la revendication 2, **caractérisé en ce qu'**une embouchure du premier tronçon (96) du au moins un conduit d'air vicié (76) débouche dans l'intérieur d'un premier bâti (27) qui abrite au moins le premier moteur (10).

4. Dispositif de nettoyage selon la revendication 3, **caractérisé en ce que** de l'air vicié du vibrateur pneumatique (72), conduit à travers le premier tronçon (96) du au moins un conduit d'air vicié (76), est conduit dans l'intérieur du premier bâti (27) de telle manière qu'il refroidit le premier moteur (10).

5. Dispositif de nettoyage selon la revendication 3 ou 4, **caractérisé en ce qu'**un gaz protecteur inerte est introduit dans l'intérieur du premier bâti (27) de telle manière qu'il refroidit le premier moteur (10).

6. Dispositif de nettoyage selon l'une des revendications 3 à 5, **caractérisé en ce que** l'intérieur du premier bâti (27) est relié à la chambre de nettoyage (6) par un filtre (106).

7. Dispositif de nettoyage selon l'une des revendications précédentes, **caractérisé en ce qu'**au moins le plateau rotatif (2), le premier moteur (10) et le premier arbre d'entraînement (24) sont positionnés en tournant simultanément sur un bras rotatif (14) qui est relié à un second arbre d'entraînement (40) qui est entraîné par un second moteur (18) en étant coaxial autour d'un second axe de rotation (16) qui est perpendiculaire par rapport à un premier axe de rotation (8) autour duquel le plateau rotatif (2) est entraîné en rotation par le premier moteur (10).

8. Dispositif de nettoyage selon la revendication 7, **caractérisé en ce que** le premier bâti (27) est placé à l'intérieur du bras rotatif (14) ou est formé par une paroi du bras rotatif (14).

9. Dispositif de nettoyage selon la revendication 7 ou 8, **caractérisé en ce qu'**un second tronçon (80) du conduit d'air entrant (74) est configuré en tournant simultanément avec le bras rotatif (14) et est relié au premier tronçon (78) du conduit d'air entrant (74) par un premier passage rotatif (82) placé coaxial par rapport au premier arbre d'entraînement (24).

10. Dispositif de nettoyage selon la revendication 9, **caractérisé en ce qu'**une partie du second tronçon (80) du conduit d'air entrant (74) est configurée à l'intérieur du bras rotatif (14).

11. Dispositif de nettoyage selon la revendication 9 ou 10, **caractérisé en ce qu'**une partie du second tronçon (80) du conduit d'air entrant (74) est configurée à l'intérieur du second arbre d'entraînement (40) et est reliée à une source d'air comprimé par un second passage rotatif (108).

12. Dispositif de nettoyage selon l'une des revendications 7 à 11, **caractérisé en ce que** de l'air vicié du vibrateur pneumatique (72) est évacué hors de la chambre de nettoyage (6) par un second tronçon (104) du conduit d'air vicié (76), le second tronçon (104) du conduit d'air vicié (76) bifurquant à partir du premier tronçon (96) du conduit d'air vicié (76) et étant configuré au moins partiellement à l'intérieur du bras rotatif (14).

13. Dispositif de nettoyage selon l'une des revendications 7 à 12, **caractérisé en ce que** le second moteur (18) entraîne le second arbre d'entraînement (40) par un second engrenage (36).

14. Dispositif de nettoyage selon l'une des revendications 7 à 13, **caractérisé en ce que** le bras rotatif (14) est configuré en forme d'U avec deux montants verticaux placés dans des plans verticaux espacés, ceci étant vu en position d'utilisation du dispositif de nettoyage (6), un premier montant vertical (46) et un second montant vertical (48), et un premier montant transversal (54) placé entre des premières extrémités (50, 52) des montants verticaux (46, 48) et horizontal, ceci étant vu en position d'utilisation du dispositif de nettoyage (6), le premier moteur (10), le premier arbre d'entraînement (24) et le plateau rotatif (2) étant positionnés sur le montant transversal (54) du bras rotatif (14).

15. Dispositif de nettoyage selon la revendication 14, **caractérisé en ce qu'**une seconde extrémité (56) du premier montant vertical (46), s'écartant de la première extrémité (50), est couplée au second arbre d'entraînement (40) qui est positionné rotatif dans un premier palier pivotant (58) et qu'un tourillon de palier (62) est coudé à la verticale à partir d'une seconde extrémité (60) du second montant vertical (48), s'écartant de la première extrémité (52) du second montant vertical (48), tourillon de palier qui est positionné pivotant dans un second palier pivotant (64), le premier palier pivotant (58) et le second palier pivotant (64) étant placés coaxiaux par rapport au second axe de rotation (16).

16. Dispositif de nettoyage selon la revendication 15, **caractérisé en ce qu'**une liaison d'écoulement (110) est configurée dans le tourillon de palier (62) entre la chambre de nettoyage (6) et un dispositif d'aspiration (112), liaison par laquelle le dispositif d'aspiration (112) aspire du matériau constitutif non solidifié hors de la chambre de nettoyage (6).

17. Dispositif de nettoyage selon l'une des revendications précédentes, **caractérisé en ce que** de l'air vicié du vibrateur pneumatique (72) conduit à travers le premier tronçon (96) du au moins un conduit d'air vicié (76) est injecté dans un dispositif de nettoyage à air comprimé du dispositif de nettoyage (1) par lequel l'air vicié ou une partie de celui-ci est soufflée par au moins une tuyère comme jet d'air vicié en direction de l'objet.

18. Dispositif de nettoyage selon l'une des revendications précédentes, **caractérisé en ce qu'**un premier engrenage (22) est prévu qui relie le premier moteur (10) au premier arbre d'entraînement (24).
